# EUROPÄISCHE PATENTSCHRIFT

(11) **EP 1 608 865 B1**
(45) Veröffentlichungstag und Bekanntmachung des Hinweises auf die Patenterteilung: **07.05.2008**
(21) Anmeldenummer: 04721539.7
(22) Anmeldetag: 18.03.2004
(51) Int. Cl.: F02M 25/07, F28D 7/00, F28F 9/02

(54) **ABGASW RMETAUSCHER UND DICHTEINRICHTUNG FÜR ABGASWÄRMETAUSCHER**
EXHAUST GAS HEAT EXCHANGER AND SEALING DEVICE FOR THE SAME
ECHANGEUR DE LA CHALEUR DE GAZ DE COMBUSTION ET DISPOSITIF D'ETANCHEITE DE CET ECHANGEUR

(30) Priorität: 21.03.2003 DE 10312788
(43) Veröffentlichungstag der Anmeldung: 28.12.2005
(73) Patentinhaber: Behr GmbH & Co. KG, 70469 Stuttgart (DE)
(72) Erfinder: LORENZ, Götz, 71638 Ludwigsburg (DE); KOLLET, Tibor, H-1073 Budapest (HU); MERCZ, József, 73525 Schwäbisch Gmünd (DE); STREBL, László, 2051 Biatorbágy (HU); TOTH, Gyula, H-1037 Budapest (HU)
(74) Vertreter: Grauel, Andreas
(86) Internationale Anmeldenummer: PCT/EP2004/002803
(87) Internationale Veröffentlichungsnummer: WO 2004/083758

(56) Entgegenhaltungen:
- EP-A- 0 205 205
- EP-A- 1 091 113
- DE-C- 907 899
- US-A- 3 948 315
- US-A- 4 564 065
- PATENT ABSTRACTS OF JAPAN Bd. 2002, Nr. 05, 3. Mai 2002 (2002-05-03) & JP 2002 004952 A (MITSUBISHI MOTORS CORP), 9. Januar 2002 (2002-01-09)
- PATENT ABSTRACTS OF JAPAN Bd. 2000, Nr. 20, 10. Juli 2001 (2001-07-10) & JP 2001 074380 A (HINO MOTORS LTD; SANKYO RADIATOR KK), 23. März 2001 (2001-03-23)
- PATENT ABSTRACTS OF JAPAN Bd. 2002, Nr. 02, 2. April 2002 (2002-04-02) & JP 2001 289583 A (USUI INTERNATL IND CO LTD), 19. Oktober 2001 (2001-10-19)
- PATENT ABSTRACTS OF JAPAN Bd. 2000, Nr. 05, 14. September 2000 (2000-09-14) & JP 2000 045883 A (HINO MOTORS LTD), 15. Februar 2000 (2000-02-15)

## Beschreibung

Die vorliegend Erfindung betrifft Abgaswärmetauscher, wie sie allgemein bekannt sind, sowie eine Dichteinrichtung, die besonders zur Verwendung bei Abgäswärmetauschem geeignet ist.

Abgaswärmetauscher werden bei Abgasrückführungen insbesondere zur Steigerung der während eines Ansaughubes angesaugten Masse von verbrannter Luft verwendet. Hierzu muss die Dichte des zurückgeführten Abgasstroms erhöht werden, was durch ein Kühlen des zurückgeführten Gasstromes erfolgt. Dies geschieht üblicherweise dadurch, dass der Abgasstrom einen Abgaswärmetauscher durchströmt, und dort Wärme an ein Kühlmittel wie eine Kühlflüssigkeit abgibt.

Es sind also Abgaswärmetauscher bekannt, die sowohl von einem Abgasstrom als auch einem Kühlmittelstrom durchströmt werden. Der Abgaswärmetauscher weist dabei für den Abgasstrom Anschlussstellen zum Anschließen des Wärmetauschers auf, wobei zum einen eine Abgaszuführleitung zum Zuführen des heißen Abgasstromes und eine Abgasabführleitung zum Abführen des im Abgaswärmetauscher abgekühlten Abgasstromes vorgesehen ist. Dabei durchströmt der Abgasstrom den Abgaswärmetauscher in einem Bündel von Abgasleitrohren in einer Durchströmrichtung. Das Bündel von Abgasleitrohren dient dabei im Wesentlichen tung. Das Bündel von Abgasleitrohren dient dabei im Wesentlichen der Vergrößerung der Austauschfläche zwischen dem Abgasstrom und dem Kühlmittelstrom. Für den Durchfluss des Kühlmittelstroms durch den Abgaswärmetauscher ist wenigstens ein Kühlmittelzufuhranschluss und wenigstens ein Kühlmittelabfuhranschluss vorgesehen. Das Kühlmittel wird dabei in einem Kühlmittelkanal geführt, innerhalb dessen es das Bündel von Abgasleitrohren umströmt.

Aus der JP 2002004952 ist ein EGR-Kühler bekannt, der an die EGR-Passage eines Motors zum Austausch von Wärme eines EGR-Gases und eines Kühlmittels bekannt. Die EGR-Gaspassage, die neben dem EGR-Kühler angeordnet ist, weist eine Vielzahl von Rohren auf.

Aus der JP 2001074380 ist ein EGR-Kühler mit einem Bypassausgang bekannt zum Abführen eines Teils des Kühlwassers, das von einem Kühlwassereinlassbereich einströmt.

Aus der JP 2001289583 ist eine Gruppe von Wärmeaustauschrohren bekannt, die eine Vielzahl von Rohrkörpern aufweist, die verbunden sind.

Bei derartigen Abgaswärmetauschern ist es entweder so, dass der Kühlmittelstrom parallel und in Richtung des Abgasstromes durch den Abgaswärmetauscher oder aber entgegen der Durchströmrichtung des Abgasstromes durch den Abgaswärmetauscher geführt ist.

Die Auswahl der Durchströmrichtung des Kühlmittelstromes bezüglich dem Abgasstrom ist dabei zum einen von konstruktiven Gegebenheiten, beispielsweise der Möglichkeit, den Längenausgleich für die thermische Ausdehnung der abgasführenden Teile durch den Abgaswärmetauscher zu ermöglichen und zum anderen hinsichtlich einer Optimierung der Wärmeabgabe des Abgasstromes im Wärmetauscher abhängig. Dabei wird die Optimierung dahingehend vorgenommen, dass der Abgasstrom eine möglichst große Wärmemenge an das Kühlmittel abgeben soll.

Darüber hinaus treten bei Abgaswärmetauschern oft auch schwingungstechnische Probleme auf. Die im Fahrbetrieb eines Fahrzeuges und im Betrieb der Brennkraftmaschine eingeleiteten Schwingungsanregungen übertragen sich auch auf den Abgaswärmetauscher und beispielsweise über den Abgasstrom werden auch Schwingungsanregungen unmittelbar auf die den Abgasstrom führenden Teile übertragen. Dabei neigen insbesondere die Abgasleitrohre zu Schwingungsverhalten, da sie meist eine möglichst lange freie Länge überbrücken und in diesem Bereich schwingen können. Aufgabe der Erfindung ist es daher, die Gestaltung eines Abgaswärmetauschers dahingehend zu optimieren, dass diese Nachteile kompensiert und gleichzeitig die abgegebene Wärmemenge optimiert werden kann. Diese Aufgabe wird erfindungsgemäß durch einen Abgaswärmetauscher gemäß dem Anspruch 1 gelöst.

Ein weiteres technisches Problem, das in Verbindung mit Abgaswärmetauschern auftritt, ist die fluiddichte Herausführung der abgasführenden Anschlussstellen aus dem Abgaswärmetauscher heraus. Diese Herausführung muss aufgrund der wechselnden thermischen Belastung ein Ausdehnungsspiel der abgasführenden Teile ausgleichen können. Andererseits muss die Dichtigkeit in diesem Bereich sichergestellt bleiben. Eine besonders günstige Ausbildung einer derartigen Dichteinrichtung kann dem weiteren unabhängigen Anspruch entnommen werden. Dabei ist eine solche Dichteinrichtung auch bei anderen fluiddicht auszubildenden Durchführungen eines Bauteiles aus einem anderen, thermisch stärker oder weniger stark belasteten Bauteil verwendbar.

Ein erfindungsgemäß ausgestalteter Abgaswärmetauscher wird von einem Abgasstrom und einem Kühlmittelstrom durchströmt. Der Abgaswärmetauscher weist für den Abgasstrom Anschlussstellen zum Anschließen des Abgaswärmetauschers sowohl an eine Abgaszuführleitung zum Zuführen eines heißen. Abgasstromes und eine Abgasabführleitung zum Abführen des im Abgaswärmetauscher abgekühlten Abgasstromes auf. Dabei durchströmt der Abgasstrom den Abgaswärmetauscher in einem Bündel von Abgasleitrohren in einer Durchströmrichtung. Ferner durchströmt ein Kühlmittel in einem Kühlmittelstrom den Abgaswärmetauscher. Hierzu ist wenigstens ein Kühlmittelzufuhranschluss und wenigstens ein Kühlmittelabfuhranschluss vorgesehen. Im Abgaswärmetauscher ist das Kühlmittel in einem Kühlmittelkanal geführt, innerhalb welchem es das Bündel von Abgasleitrohren umströmt. Gemäß der Erfindung weist der Kühlmittelkanal wenigstens zwei Bereiche auf, die sich bezüglich der Durchströmrichtung des Abgasstromes durch voneinander abweichende Durchströmrichtungen des Kühlmittels unterscheiden.

Durch die Unterteilung des Kühlmittelkanals in zwei Bereiche, die in unterschiedlicher Richtung durchströmt werden, kann die Wärmeübertragung vom Abgasstrom an den Kühlmittelstrom dadurch verbessert werden, dass die Temperaturdifferenz zwischen Abgasstrom und Kühlmittelstrom dadurch erhöht wird, dass zweimal ein Abschnitt zur Verfügung steht, an dem Kühlmittel mit der Ausgangstemperatur zugeführt wird und diese nicht über die gesamte Länge des Abgaswärmetauschers hinweg in Kontakt mit dem Abgasstrom steht.

Gemäß der Erfindung ist ein entgegen der Durchströmrichtung des Abgasstroms durchströmter Bereich des Kühlmittelkanals anströmseitig der Abgasleitrohre und vorzugsweise an in Durchströmrichtung des Abgasstromes durchströmter Bereich des Kühlmittelkanals abströmseitig der Abgasleitrohre ausgebildet.

Hierbei ist gemäß vorteilhafter Ausgestaltung der Erfindung jedem der Bereiche mindestens ein Kühlmittelkanalsegment zugewiesen, wobei ein Kühlmittelkanalsegment fluidisch jeweils mit dem Kühlmittelzufuhranschluss und dem Kühlmittelabfuhranschluss verbunden ist. Die Aufteilung in Kühlmittelkanalsegment und ihre jeweilige fluidische Verbindung mit Kühlmittelzufuhranschluss und Kühlmittelabfuhranschluss erlaubt eine einfache Aufteilung des Kühlmittelkanals in Teilabschnitte mit unterschiedlicher Durchströmrichtung.

Es ist gemäß vorteilhafter Ausgestaltung wenigstens ein Bereich des Kühlmittelkanals in der Durchströmrichtung des Abgasstromes durchströmt. Eine Durchströmung in gleicher Richtung von Abgasstrom und Kühlmittelstrom erlaubt eine relativ lange Kontaktzeit zwischen dem durchströmenden Kühlmittel und dem durchströmenden Abgas. Hierdurch wird insbesondere dann, wenn der Temperaturunterschied zwischen Abgas und Kühlmittel sehr groß ist, ein sehr günstiger Energieübertrag vom Abgasstrom auf den Kühlmittelstrom ermöglicht. Gemäß weiterer vorteilhafter Ausgestaltung besteht wenigstens ein Bereich, in dem der Kühlmittelstrom entgegen der Durchströmrichtung des Abgasstromes durchströmt. Durch diese Maßnahme wird über die gesamte Länge des Bereichs hinweg eine möglichst konstante Temperaturdifferenz zwischen Abgasstrom und Kühlmittelstrom aufrechterhalten. Auch diese Maßnahme dient der Optimierung des Energieübertrags vom Abgasstrom auf den Kühlmittelstrom. Auch eine Strömungsrichtung des Kühlmittelstromes quer zum Abgasstrom ist möglich.

Gemäß einer alternativen Ausgestaltung ist es vorgesehen, dass ein entgegen der Durchströmrichtung des Abgasstromes durchströmter Bereich des Kühlmittelkanals anströmseitig der Abgasleitrohre und vorzugsweise ein in Durchströmrichtung des Abgasstromes durchströmter Bereich des Kühlmittelkanals abströmseitig der Abgasleitrohre ausgebildet ist.

Eine weiterführende Ausgestaltung der Erfindung sieht vor, dass die wenigstens zwei Bereiche ein festes Längenverhältnis aufweisen. Das Längenverhältnis ist dabei gemäß einer ersten vorteilhaften Ausgestaltung in Abhängigkeit des thermischen Ausdehnungskoeffizienten des für die Herstellung der Abgasleitrohre verwendeten Materials bestimmt. Vorzugsweise ist das Längenverhältnis so gewählt, dass eine feste Beziehung in der thermischen Längenausdehnung der beiden Bereiche eingehalten wird, wobei feste Beziehung insbesondere in einem temperaturunabhängig konstanten Längenverhältnis von vorzugsweise Eins besteht. Durch diese Maßnahme wird erreicht, dass die beiden unterschiedlich durchströmten Bereiche temperaturunabhängig voneinander ein konstantes Längenverhältnis aufweisen. Diese Maßnahme führt insbesondere dazu, dass das thermische Ausdehnungsverhalten des Abgaswärmetauschers günstig beeinflusst wird.

Eine andere vorteilhafte Ausgestaltung sieht vor, dass das Längenverhältnis derart bestimmt wird, dass in jedem der beiden Bereiche ein vorgegebener Anteil der vom Abgasstrom insgesamt abgegebenen Wärmeenergie abgegeben wird. Es kann dabei insbesondere vorgesehen sein, dass einem, beispielsweise dem zuerst vom Abgasstrom durchströmten Bereich, ein geringer Anteil der insgesamt abgegebenen Wärmemenge abgegeben wird, wobei beispielsweise in einem der beiden Bereiche mehr als 70 %, insbesondere zwischen 80 und 95 % der insgesamt abgegebenen Wärmemenge abgegeben wird. Gemäß einer derartigen Ausgestaltung der Erfindung wird also ein Abgaswärmetauscher geschaffen, indem in einem ersten Bereich, der vorzugsweise kurz gehalten ist eine geringe Wärmemenge abgegeben wird, während der Hauptteil der Wärmemenge in einem nachfolgenden Langen Abschnitt ausgetauscht wird. Diese Maßnahme ermöglicht es, den Energieaustausch auf zwei Bereiche zu verteilen, wobei jeder der Bereiche in seiner Funktion optimiert ist. Insbesondere kann daher in vorteilhafter Weise durch eine solche Ausbildung ein insgesamt größerer Energiebetrag vom Abgasstrom auf das Kühlmittel übertragen werden.

Gemäß vorteilhafter Ausgestaltung der Erfindung sind die Abgasleitrohre derart ausgebildet, dass in ihrem Inneren eine turbulente Abgasströmung ausgebildet ist. Die Maßnahme des Bereitstellens einer turbulenten Abgasströmung vergrößert die Verweilzeit des Abgases im Abgasleitrohr und optimiert daher den Wärmeaustausch innerhalb des Abgaswärmeaustauschers.

Ein erfindungsgemäß ausgebildeter Abgaswärmetauscher, bei dem es sich auch um eine Weiterbildung der vorhergenannten Ausgestaltungen handeln kann, sieht vor, dass der Abgaswärmetauscher wenigstens einen Rohrkörper aufweist, der aus einem Bündel von parallel zueinander ausgerichteten Abgasleitrohren gebildet wird. Dabei sind die Enden der Abgasleitrohre jeweils an einem gemeinsamen Rohrboden fixiert. Die fußen dabei jeweils in einem Durchbruch des jeweiligen Rohrbodens und schließen diesen Durchbruch fluiddicht ab. Alle Durchbrüche des Rohrbodens sind jeweils einem Abgasleitrohr zugeordnet. Der Aufbau eines Rohrkörpers in dieser Weise ist einfach herstellbar. Darüber hinaus ist der Rohrkörper aufgrund dieser Bauweise fest und gegen Schwingungen wenig anfällig.

Gemäß vorteilhafter Ausgestaltung ist dabei vorgesehen, dass bei wenigstens einem der Rohrböden, auf der dem Rohrbündel abgewandten Seite des Rohrkörpers eine Abgassammelglocke angeordnet ist, die eine Anschlussstelle aufweist und mit dem Rohrboden fluiddicht verbunden ist. Die Abgassammelglocke stellt ein einfaches Mittel dar, einen Übergang zwischen einer Anschlussstelle und dem Rohrkörper zu schaffen, wobei ein Verteilen des Abgasstromes auf die einzelnen Abgasleitrohre des Rohrkörpers oder ein Sammeln der Teilströme nach dem Durchströmen der Abgasleitrohre ermöglicht wird.

Gemäß weiterführender vorteilhafter Ausgestaltung weist der Abgaswärmetauscher zwei Rohrkörper auf, wobei zwei Rohrböden der Rohrkörper einander zugewandt - insbesondere unmittelbar aneinander stoßen, wobei die Abgasleitrohre vorzugsweise fluchtend zueinander ausgerichtet sind - und nach außen hin fluiddicht miteinander verbunden sind. Die Unterteilung der Abgasführung in zwei Rohrkörper ermöglicht es, das Schwingungsverhalten der Abgasleitrohre im Abgaswärmetauscher in Richtung höherer Schwingungseigenfrequenzen zu verschieben. Hierdurch wird in vorteilhafter Weise erreicht, dass die Standzeit des Abgaswärmetauschers erhöht wird. Die Schwingungseigenfrequenzen werden in einen Bereich verschoben, in dem weniger Schwingungsanregungen gegeben sind. Dies liegt in der Verkürzung der freien Längen der Abgasleitrohre. Dadurch wird sowohl das Schwingungsverhalten als auch eine mögliche Geräuschentwicklung durch den Abgaswärmetauscher vermindert.

Gemäß bevorzugter Ausgestaltung ist hierbei vorgesehen, dass an den beiden freien Enden zweier miteinander verbundener Rohrkörper jeweils eine Abgassammelglocke angeordnet ist, die jeweils eine Anschlussstelle aufweisen und mit dem Rohrbündel fluiddicht verbunden sind. Dabei ist es insbesondere vorgesehen, dass sich der Kühlmittelkanal des Abgaswärmetauschers über die Länge zwischen den beiden Abgassammelglocken erstreckt und gegebenenfalls diese auch teilweise mit umfasst. Dabei ist jeweils eine Dichteinrichtung zwischen den Abgassammelglocken und einem den Kühlmittelkanal begrenzenden Kühlmittelgehäuse ausgebildet, das die Rohrkörper radial umschließt. Gemäß einer weiter bevorzugten vorteilhaften Ausgestaltung des Kühlmittelleitgehäuses ist dieses aus zwei Halbschalen zusammengesetzt, die sich zu einem Gehäuse ergänzen, das nach außen geschlossen ist. Die Halbschalen weisen einerseits zwei Anschlüsse auf, die endständig der Halbschalen ausgebildet sind. Eine der Halbschalen weist insbesondere im Bereich einer Aufweitung des Außendurchmessers der Halbschalen eine weitere Anschlussstelle auf, wobei die Anschlussstellen der Zufuhr und der Abfuhr von Kühlmitteln dienen.

Bei dem Kühlmittel handelt es sich insbesondere um Kühlwasser, das aus dem Kühlkreislauf der Brennkraftmaschine abgezweigt wurde und anschließend diesem wieder zugeführt wird. Dabei ist es insbesondere möglich, dass die Kühlflüssigkeit danach noch einem weiteren Wärmetauscher, insbesondere dem Wärmetauscher zum Erzeugen eines Warmluftstromes für eine Fahrzeugheizung zugeführt wird. Anstelle des Wassers kann es sich bei dem Kühlmittel auch um ein anderes Fluid, beispielsweise um durchströmende Luft handeln. Die Verwendung von Luft reduziert zwar die thermische Kapazität des Kühlmittels gegenüber anderen Kühlmitteln, beispielsweise Wasser, jedoch kann die dabei entstehende gewärmte Luft direkt an anderer Stelle, beispielsweise zum Abtauen von Fahrzeugscheiben oder dergleichen verwendet werden. Selbstverständlich kann der Kühlmittelstrom in diesem Fall auch zum Beheizen des Fahrzeuginnenraumes direkt verwendet werden.

Gemäß einem erfindungsgemäßen Verfahren zum Herstellen eines Abgaswärmetauschers werden zunächst die Rohrkörper erzeugt. Erforderlichenfalls werden die beiden Rohrkörper fluiddicht miteinander verbunden. Anschließend werden die Abgassammelglocken an den freien Enden der Rohrkörper befestigt und insbesondere fluiddicht mit den Rohrböden verbunden. Der Rohrkörper wird, gegebenenfalls im Bereich der Abgasleitrohre durch Zwischenstege weiter abgestützt, in eine untere Halbschale eingesetzt. Die Dichteinrichtungen werden an den Abgassammelglocken befestigt. Sie werden mit der unteren Halbschale des Kühlmittelleitgehäuses fluiddicht verbunden. Nun wird die obere Halbschale auf die untere Halbschale aufgesetzt. Im Bereich der Dichteinrichtung und über die Stoßkante der beiden Halbschalen aneinander wird eine fluiddichte Verbindung hergestellt.

Ein besonderes günstiges Verfähren zum Herstellen zweier Rohrkörper, deren Abgasleitrohre fluchtend zueinander ausgerichtet sind, ist darin zu sehen, dass zwei dicht nebeneinander angeordnete Rohrböden auf eine entsprechende Anzahl von Abgasleitrohren aufgeschoben wird, die durchgehend gesehen die Gesamtlange des Paares von Rohrkörpern aufweist. Dabei kann schon eine Verbindung zwischen den Rohrböden und den einzelnen Abgasleitrohren hergestellt werden. Die Verbindung kann beispielsweise durch Aufschrumpfen, durch entsprechendes Verkleben oder aber durch Verschweißen erzeugt werden. Vor oder nach dem Herstellen der Verbindung zwischen den einzelnen Abgasleitrohren und dem Rohrkörper erfolgt ein Durchtrennen des Bündels von Abgasleitrohren in einem Spalt zwischen den beiden Rohrböden. Vor diesem Zertrennen können auch die außen liegenden Rohrböden auf das Bündel von Abgasleitrohren aufgeschoben werden. Das Durchtrennen erfolgt insbesondere durch Laserschneiden oder ein vergleichbares Verfahren. Das Durchtrennen kann dabei gemäß bevorzugter Ausgestaltung jeweils flächenbündig zu beiden Rohrböden erfolgen. Soweit danach ein weiterer Arbeitsschritt zum Befestigen der Abgasleitrohre an den Rohrböden durchgeführt werden muss, so wird dieser jetzt durchgeführt. Anschließend können die beiden Rohrböden fluiddicht miteinander verbunden werden, was insbesondere dadurch erfolgen kann, dass sie längs ihrer aneinander stoßenden Flächen miteinander verklebt oder verschweißt werden, wobei die Schweißnaht auf der Außenkontur der Rohrböden folgen kann. Es ist aber auch möglich, über eine umlaufende Umbördelung oder ein Verklammern eine zusätzliche oder alleinige Befestigung der Rohrböden aneinander zu erzeugen. Im Anschluss daran kann an den freien Enden der Abgasleitrohre, soweit noch nicht geschehen, auch jeweils ein Rohrboden befestigt werden. Auf die Rohrböden werden die Gassammelglocken aufgeschweißt.

Eine erfindungsgemäß ausgestaltete Dichteinrichtung für einen Abgaswärmetauscher oder eine andere fluiddichte Durchführung zwischen zwei Bauteilen, nämlich einem abgasführenden Heißbauteil und einem eine Kühleinrichtung nach außen begrenzenden Kaltbauteil dient dem Durchführen des Heißbauteils nach außen durch das Kaltbauteil. Dabei ist das Heißbauteil in dem Kaltbauteil axial geführt längsverschiebbar gehalten angeordnet. Gemäß der Erfindung weist die Dichteinrichtung zwei voneinander abhängige Dichtelemente auf. Jedes dieser Dichtelemente stellt eine fluiddichte Verbindung zwischen Heißbauteil und Kaltbauteil her.

Das Vorsehen einer doppelten Dichtung, mit zwei voneinander vollständig unabhängigen Dichteinrichtungen erhöht insbesondere bei hohen thermischen Belastungen ausgesetzten Anwendungen die Standzeit und die Sicherheit der Dichteinrichtung. Dabei muss beachtet werden, dass die Dichteinrichtung einerseits zwar im Bereich des von der Kühlflüssigkeit gekühlten Bauteiles angeordnet ist, andererseits durchaus aber den hohen Temperaturen des Heißbauteils ausgesetzt sein kann.

Gemäß bevorzugter Ausgestaltung der Erfindung ist dabei zwischen den beiden Dichtelementen der Dichteinrichtung eine fluiddicht abgeschlossene Zwischenkammer ausgebildet. Diese Zwischenkammer erlaubt es, dass die Dichtungen voneinander räumlich getrennt werden und gleichzeitig zwischen den beiden einen Isolationsspalt bilden. Im Übrigen kann das Eindringen eines der beiden Medien, also des Abgasstroms oder des Kühlmittelstroms in die Zwischenkammer zwischen den beiden Dichteinrichtungen ein Hinweis auf eine entsprechende Leckage darstellen und überwacht werden.

Gemäß bevorzugter Ausgestaltung der Erfindung ist in die Dichteinrichtung im Bereich zwischen den beiden Dichtelementen wenigstens eine das Kaltbauteil durchsetzende, nach außen führende Bohrung angebracht, wobei die wenigstens eine Bohrung insbesondere über eine Teillänge hinweg ein Gewinde aufweist. Das Vorsehen von entsprechenden Bohrungen, die insbesondere in die Zwischenkammer führen können, führt dazu, dass in einfacher Weise zum einen beim Herstellen die Dichtigkeit der Dichteinrichtungen überprüfbar ist und zum anderen auch das Auftreten von Leckagen der Dichteinrichtungen überwacht werden kann. Es ist insbesondere möglich, festzustellen, ob das erste, innen liegende Dichtelement der Dichteinrichtung gegenüber der zwischen dem Heißbauteil und dem Kaltbauteil liegenden Dichtung noch dichtend abschließt. Es kann erst dann Medium aus dieser Kammer in den Zwischenraum zwischen den beiden Dichtelementen eindringen, wenn die innen liegende Dichtung undicht ist: Dies würde sich durch den Austritt von die Kammer durchströmendem Medium, beispielsweise einem Kühlmittel, bemerkbar machen. Dies würde in diesem Fall an der wenigstens einen Bohrung austreten und wäre dort nachweisbar. Gemäß einer bevorzugten Ausgestaltung der Erfindung weist die Dichteinrichtung mehrere; insbesondere zwei oder drei derartige Bohrungen auf. Die Bohrungen sind insbesondere zum Anschließen einer Abdrückvorrichtung zum Durchführen einer Dichtigkeitsüberprüfung geeignet. Ein Verfahren zum Durchführen einer Dichtigkeitsprüfung vor Verwendung einer Einrichtung mit einer derart ausgestalteten Dichteinrichtung besteht darin, dass die Bohrungen verschlossen werden, insbesondere, dass Leitungsendungen in die Bohrungen eingeschraubt werden. Über wenigstens eine der Leitungen wird dann ein druckbeaufschlagtes Fluid, beispielsweise Druckluft zugeführt. Es wird über ein an einer anderen Bohrung angeschlossenes Druckmessgerät, überprüft, ob der bereitgestellte Druck in dem Zwischenraum über eine vorgegebene Zeit hinweg konstant aufrechterhalten werden kann, ohne dass druckbeaufschlagtes Fluid nachgeführt wird. Nach entsprechendem Entlüften kann die Abdrückvorrichtung dann wieder entfernt werden. Tritt eine Leckage auf, so kann beispielsweise über Druckmessung an den Anschlussstellen der Kammer eines erfindungsgemäß ausgestalteten Abgaswärmetauschers überprüft werden, ob die Leckage in die Kammer hinein erfolgt. Dies kann bei beispielsweise durch einen Druckanstieg in der Kammer festgestellt werden. Somit ist es mittels des Abdrückens nicht nur möglich, Undichtigkeiten festzustellen, sondern auch noch zuzuordnen, welcher der beiden Dichtelemente nicht vollständig abdichtet. Auch die Dichtheit der Kühlmittelkanäle kann durch solches Abdrücken überprüft werden.

Es entspricht vorteilhaften Ausgestaltungen, wenn wenigstens eines der beiden Dichtelemente eine Radialdichtung ist oder wenn wenigstens eines der beiden Dichtelemente eine Axialdichtung ist. Die Begriffe Radialdichtung und Axialdichtung wurden dabei so gewählt, dass eine Radialdichtung eine Dichtung bezeichnet, bei der das Dichtmittel in radialer Richtung von einer Dichtfläche sich auf die andere Dichtfläche hin erstreckt und einen Zwischenraum abdichtet. Eine Axialdichtung erstreckt sich längs einer Achse und dichtet einen Spalt ab, der dementsprechend ausgerichtet ist. Daher ist bei einer Radialdichtung die Durchflussrichtung einer Leckage axial ausgerichtet, während dies bei einer Axialdichtung radial verläuft. Als Radialdichtung können insbesondere Dichtringe aus Kunststoffmassen oder mit Metallen verwendet werden, während die Axialdichtung beispielsweise als Balgdichtung ausgestaltet sein kann, bei der ein ziehharmonikaartig gefalteter, einen Ring bildender Balg mit seinen axialen Enden jeweils mit einem Bauteil der gegeneinander abzudichtenden Bauteile fluiddicht verbunden ist.

Eine Dichtigkeitsüberprüfung während der Benutzung der Dichteinrichtung beispielsweise während des Betriebes eines Fahrzeugs und der Verwendung der Dichteinrichtung bei einem Abgaswärmetauscher erfolgt dabei beispielsweise so, dass das Austreten von Kühlmittel an einer Bohrung überprüft wird. Anstelle einer Sichtprüfung kann selbstverständlich auch eine sensorische Prüfung über einen dort angeordneten Feuchtigkeitssensor durchgeführt werden. Hierzu entspricht es einer vorteilhaften Ausgestaltung der Erfindung, wenn die wenigstens eine Bohrung im Bereich der Einbaulage an dem tiefstliegenden Punkt der Dichteinrichtung angeordnet ist.

Es entspricht einer besonders vorteilhaften Ausgestaltung, wenn die Dichteinrichtung je eine Axialdichtung und eine Radialdichtung aufweist, wobei die beiden Dichtungen beabstandet voneinander angeordnet sind, so dass insbesondere zwischen den beiden Dichtelementen eine Zwischenkammer ausgebildet ist. Dabei ist insbesondere die Axialdichtung die innen liegende, bei Funktion die beiden Teile zueinander abdichtende Dichtung; während die Radialdichtung insbesondere die Rückfalldichtung ist, für den Fall, dass die Axialdichtung Leckagen aufweist.

Die Verwendung einer Axialdichtung in Verbindung mit einer Durchführung bei einer Dichteinrichtung gemäß der Erfindung hat dabei insbesondere den Vorteil, dass diese geeignet ist, beispielsweise aufgrund von Temperaturveränderungen auftretende Längenspiele von zueinander beweglichen Bauteilen leichter ausgleichen zu können, als dies bei einer Radialdichtung der Fall ist, die hierbei entlang einer Dichtfläche gleiten können muss, damit ein axialer Hub der beiden gegeneinander abgedichteten Teile ausgeglichen werden kann. Die Verwendung von zwei unterschiedlichen Dichtelementen hat auch den Vorteil, dass unterschiedlichen Stärken sich bei auftretenden Belastungen und über die Lastzyklen hinweg einander ergänzen.

Im Übrigen ist die Erfindung anhand des in der Zeichnung dargestellten Ausführungsbeispiels nachfolgend näher erläutert, dabei zeigt:
- Fig. 1: die Schnittdarstellung durch einen erfindungsgemäßen Abgaswärmetascher,
- Fig. 2: den Schnitt anhand der Schnittlinie B-B durch Fig. 1 im Bereich des mittigen Anschlusses;
- Fig. 3: den Schnitt gemäß der Schnittlinie A-A durch Fig. 1; und
- Fig. 4: die vergrößerte Detaildarstellung einer erfindungsgemäßen Dichteinrichtung.

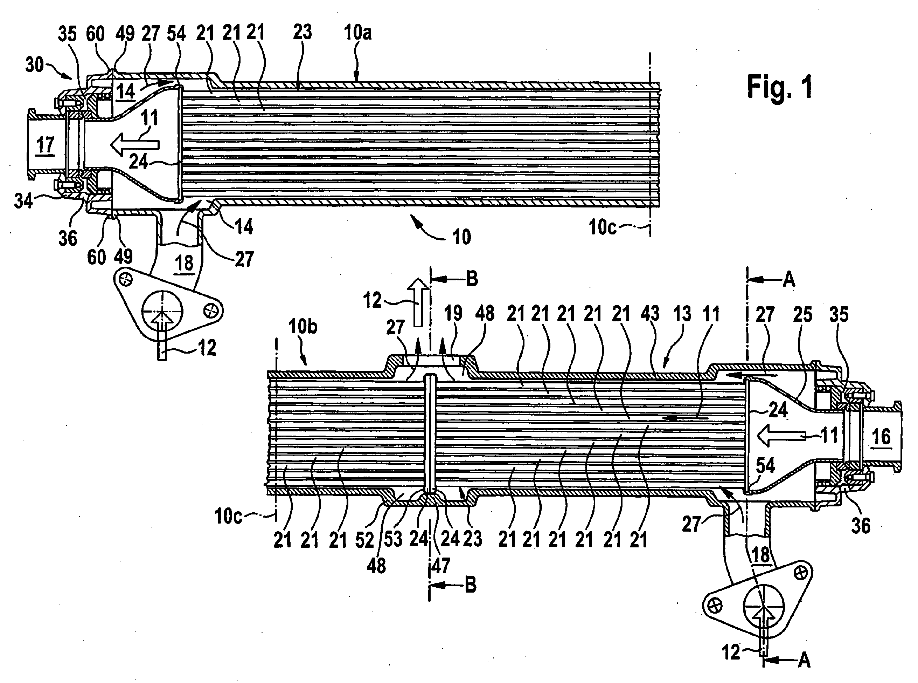

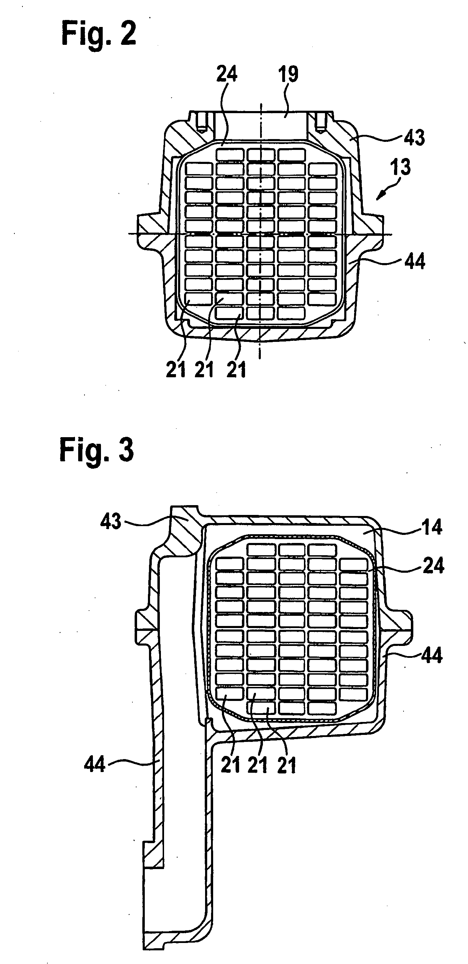

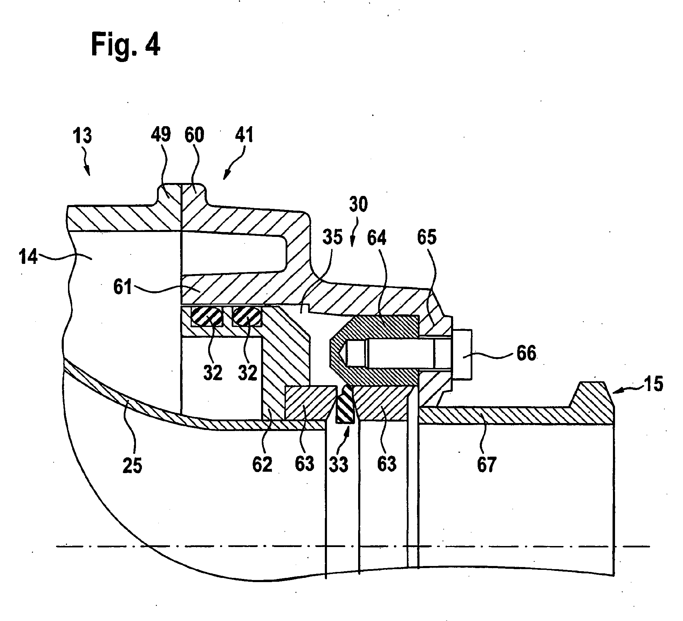

Die Fig. 1 zeigt in einer Schnittdarstellung einen erfindungsgemäß ausgebildeten Abgaswärmetauscher 10. Dabei wurde in der Darstellung der Fig. 1 der Abgaswärmetauscher 10 in zwei Teile 10a und 10b zerteilt, wobei das Zerteilen längs der strichpunktiert dargestellten Zerteillinie 10c erfolgt ist, damit die Darstellung des an sich linear ausgebildeten Wärmetauscher vergrößert stattfinden kann, ohne die Proportionen der beiden Rohrkörper 23 verändert wiedergeben zu müssen. Die Fig. 2 und 3 zeigen dabei Schnittdarstellungen längs der in Fig. 1 dargestellten Schnittlinien A-A und B-B. Die Fig. 4 zeigt eine vergrößerte Detaildarstellung im Bereich einer Dichteinrichtung, wie sie auch in Fig. 1 dargestellt ist.

Nachfolgend ist ein erfindungsgemäßer Abgaswärmetauscher 10, wie er in den Fig. 1 bis 4 dargestellt ist, anhand eines Verfahrens zum Herstellen eines solchen Abgaswärmetauschers beschrieben.

Zunächst wird eine Anzahl von Abgasleitrohren 21, bei denen es sich insbesondere um rechteckige ablängbare Halbzeuge handeln kann, entsprechend den Bedürfnissen der Erfindung in geeigneter Anzahl parallel zueinander ausgerichtet. Hierzu werden zunächst die Halbzeuge auf eine Länge abgelängt, die ungefähr der Gesamtlänge der durch die Abgasleitrohre 21 in dem Abgaswärmetauscher gebildete Strekke entspricht. Danach werden, leicht beabstandet voneinander, die zwei Rohrböden 24, die zu einem späteren Zeitpunkt miteinander verbunden werden, auf die Abgasleitrohre 21 aufgeschoben. Dabei werden diese Rohrböden 24 so auf den Abgasleitrohren 21 positioniert, dass sich die beiden nach außen hin ergebenden freien Längen der Halbzeuge entsprechend dem gewünschten Verhältnis zwischen den Längen der Abgasleitrohre der beiden Rohrkörper 23 verhalten. Auch die endständigen Rohrböden 24 werden auf die Abgasleitrohre 21 aufgeschoben. Es fußt dabei jeweils ein Abgasleitrohr in jedem zur Aufnahme eines Abgasleitrohres bestimmten Öffnung des Rohrbodens. Die endständigen Rohrböden können ebenso wie die beiden zuerst aufgeschobenen Rohrböden 24 durch Aufschrumpfen mit den Abgasleitrohren 21 verbunden sein. Soweit gewünscht oder erforderlich können die endständigen Rohrböden 24 zum Herstellen einer fluiddichten Verbindung zu den Abgasleitrohren 21 alternativ oder zusätzlich mit denselben verschweißt werden. Danach erfolgt ein Trennen der durch die mittleren Rohrböden durchragenden Halbzeuge, wobei dieses Trennen beispielsweise durch Laserschneiden durchgeführt werden kann. Dabei erfolgt das Trennen jeweils flächenbündig zu den einander zugewandten Seiten der beiden Rohrböden 24. Anschließend werden, soweit dies noch erforderlich ist, die Abgasleitrohre 21 mit den beiden ansonsten einander zugewandten Rohrböden 24 fluiddicht verbunden, beispielsweise durch entsprechendes Verschweißen, wobei auch hier Laserschweißverfahren zur Anwendung kommen können. Auf diese Weise werden aus den Halbzeugen,in einfacher Weise zwei Rohrkörper 23 gebildet, die ein Paar bilden.

Die einander zugewandten, innen liegenden Rohrböden 24 werden im nächsten Arbeitsschritt fluiddicht miteinander verbunden, was beispielsweise dadurch erfolgt, dass sie längs ihrem Seitenrand miteinander verschweißt werden, wobei auf die Ausbildung einer fluiddichten durchgehenden Schweißnaht geachtet wird. Das Schweißen kann sowohl durch Laserschweißen als auch durch Rollschweißen oder andere Schweißverfahren erfolgen. Zur Bildung einer definierten Außenkontur der beiden Rohrböden können diese auch noch von einer rundlaufenden, insbesondere auch dichtauf geschweißten Ringschelle 53 umgriffen werden.

Nun werden an den außen liegenden Rohrböden 24 auf der den Abgasleitrohren 21 abgewandten Seite jeweils eine Abgassammelglocke 25 fluiddicht aufgeschweißt. Auch hierbei kann eine ringförmige Schelle 54 die Außenkontur im Bereich der Ansatzstelle zwischen Rohrboden 24 und Abgassammelglocke bilden. Auch beim Befestigen der Abgassammelglocken kommen insbesondere Schweißverfahren mit kontinuierlich durchlaufender Schweißnaht als Befestigungsmöglichkeit in Frage.

Danach wird die so aus zwei Rohrkörpern 23, die von Abgassammelglocken 25 beidseitig abgeschlossen werden, in eine untere Halbschale 44 eingesetzt. Die untere Halbschale bildet ein Teil des Kühlmittelleitgehäuses 13 und grenzt im Bereich ihres Verlaufs die Kammer 14 im Inneren des Kühlmittelleitgehäuses nach außen ab. Dabei wird die Baueinheit im Bereich der beiden miteinander verschweißten Rohrböden 24, also nicht randständig im Erstreckungsbereich der Baueinheit gehalten. Die untere Halbschale 44 weist dabei eine radiale Aufweitung 52 auf, die sich axial beidseitig der beiden Rohrböden 24 erstreckt. Im Bereich der radialen Aufweitung 52 ist ein Anlagering 47 ausgebildet, der die Ringschelle 53 radial umfasst und so eine fixierte Halterung für die Baueinheit bildet. Durch die Anlage der Ringschelle 53 an dem Anlagering 47 wird der Fluidpfad in axialer Richtung durch die Kammer 14 hindurch unterbunden. Lediglich im Bereich der radialen Aufweitung 52 bildet sich beidseitig des Anlagerings 47 eine Ringkammer 48, die an einer Stelle in eine Anschlussstelle 19, hier einen Kühlmittelabfuhranschluss 19 mündet, der mit beiden durch die Rohrböden 24 voneinander getrennten Seiten fluidisch verbunden ist. Im dargestellten Ausführungsbeispiel ist der Kühlmittelabfuhranschluss 19 jedoch in der später aufgesetzten oberen Halbschale 43 angeordnet.

Nach dem Einsetzen der Baueinheit in die untere Halbschale 44 wird die Dichteinheit 30 angesetzt. Die Dichteinheit 30 beinhaltet einen Grundkörper, der im Wesentlichen rotationssymmetrisch ausgebildet ist. Der Grundkörper endet in einem Einlageflansch 60, der sich an einen entsprechenden Anlageflansch 49 der oberen Halbschale 43 und der unteren Halbschale 44 anlegen kann. Dabei werden die Flansche 49 und 60 beispielsweise durch Verschweißen fluiddicht miteinander verbunden. Radial nach innen versetzt Weist der Grundkorper 34 eine Anlagehülse 61 auf, die axial gesehen in den Bereich der Abgassammelglocke 25 hineinragt. In diesem Bereich ist die Anlagehülse 61 zylindrisch, also rotationssymmetrisch mit in axialer Richtung gesehen konstantem Durchmesser ausgebildet. Vor dem Aufsetzen des Grundkörpers 34 wird auf die Abgassammelglocke 25 ein Zwischenring 62 aufgeschweißt und umgibt den äußeren Stutzen der Abgassammelglocke radial fluiddicht. Auf diesen Zwischenring 62 wird axial die Balgdichtung 33 aufgeschoben, die als Befestigungsstellen jeweils einen Ringkörper 63 an ihren axialen Enden aufweist, zwischen dem sich der Balg der Balgdichtung 33 erstreckt und an denen Letzterer jeweils fluiddicht befestigt ist. Einer der beiden Ringkörper 63 wird mit dem Zwischenring 62 fluiddicht verschweißt. Der andere Ringkörper 63 weist einen Außenring 64 auf, der Bohrlöcher aufnehmen kann, die vorzugsweise als Sackloch ausgeführt sind. Dabei entspricht der Außendurchmesser des Außenrings 64 ungefähr dem Außendurchmesser des Zwischenrings 62, ist von diesem jedoch axial beabstandet, dieser axiale Abstand bildet die Zwischenkammer 35. Radial außen liegend am Zwischenring 62, auf der Mantelfläche ist als Radialdichtung 32 ein Paar von O-Ringen angeordnet. Nach dem Befestigen von Zwischenring 62 und Axialdichtung 33 an der Abgassammelglocke 25 wird der Grundkörper 34 so in axialer Richtung über die Abgassammelglocken 25 geschoben, dass die Radialdichtung 32 des Zwischenrings 62 in dichtende Anlage mit der inneren Zylinderfläche der Anlagehülse 61 gelangt.

In axialer Richtung weiter außen liegend wird der Außenring 64 der Axialdichtung 33 von der Anlagehülse 61 radial umfasst, wobei die Außenkonturen dabei eine aufeinander abgestimmte konische Ausbildung aufweisen können, die sich axial nach außen hin verjüngen. Die Anlagehülse 61 geht in eine Überwurfläche 65 -über, die entsprechend den Bohrungen in dem Außenring 64 positionierte Bohrungen aufweist und über die eine Schraubbefestigung mit Befestigungsschrauen 66 erfolgen kann, wobei über die insbesondere formschlüssige Anlage des Außenrings 64 an der Überwurffläche 65 und der zylindrischen bis konischen Innenfläche der Anlagehülse 61 in fluiddichter Abschluss erreicht wird. Die Überwurffläche 65 gibt dabei eine Öffnung frei, in die ein Anschlussflansch 67 eingesetzt ist, der als Hülse ausgebildet ist und dessen freier, durchstrombarer Innendurchmesser dem Durchmesser der Abgassammelglocke in ihrem Zuströmbereich entspricht. Der vom Abgas durchströmte Innenbereich der Abgassammelglocke wird dabei über die Axialdichtung 33 und die Radialdichtung 32 von der Kammer 14 im Inneren des Kühlmittelleitgehäuses 13 getrennt. Dadurch, dass in axialer Richtung die Axialdichtung 33 über die Faltung ihres Balges Axialbeweglichkeit aufweist und der Zwischenring 62 in axialer Richtung in der Anlagehülse 61 gleiten kann, ist ein axialer Ausgleich der thermischen Dehnung der beiden Rohrkörper 23 möglich. Die Durchführung der Abgaszuführleitung 16 bzw. der Abgasabführleitung 17 durch den Abgaswärmetauscher ist also in axialer Richtung gesehen ein Loselager. Lediglich im Bereich des Anlageringes 47 ist eine ortsfeste Halterung der Rohrkörper 23 und somit der gesamten Heißbauteile aus den Kaltbauteilen heraus gegeben.

Dabei ist das Heißbauteil 40 in diesem Fall die Abgassammelglocke 25 sowie der eine Anschlussstelle 15 bildende Anschlussflansch 67. Das Kaltbauteil 41 wird durch die obere und unteren Halbschalen 43, 44 sowie durch den Grundkörper 34 der Dichteinrichtung 30 gebildet.

Durch den Grundkörper 34 hindurch sind Bohrungen 36 in die Zwischenkammer 35 geführt, welche in axialer Richtung durch den Zwischenring 62 und den Ringkörper 63 bzw. den Ring 64 und radial durch die Axialdichtung 33 sowie die Anlagehülse 61 begrenzt wird. Weist die Radialdichtung 32, die hier aus zwei voneinander unabhängigen O-Ringen gebildet wird, eine Leckage auf, so fließt Flüssigkeit aus der Kammer 14 durch diese Leckage in die Zwischenkammer 35. Im Inneren der Zwischenkammer 35 fließt diese Flüssigkeit dann an den tiefsten Punkt, indem jeweils eine Bohrung 36 eingebracht ist. Durch das Austreten von Flüssigkeit aus dieser Bohrung heraus, kann das Vorliegen einer Leckage festgestellt werden, ein Übertritt der austretenden Kühlflüssigkeit, beispielsweise Kühlwasser, in den Abgas führenden Teil ist aufgrund des Vorhandenseins der Axialdichtung 33 allerdings nicht möglich.

In der unteren Halbschale 44 sind auch die Anschlussstellen für den Kühlmittelzufuhranschluss 18 ausgebildet. Diese sind dabei in einem Bereich der unteren Halbschale 44 ausgebildet, indem diese auch einen Teil der Abgassammelglocke 25 umgibt, so dass sich die im Inneren die sich ausbildenden Kühlmittelleitgehäuses 13 ausgebildeten Kammer 14 liegt und somit auch in Kontakt mit dem Einfluss des Kühlmittels steht.

Im nächsten Arbeitsschritt wird die obere Halbschale 43 auf die untere Halbschale 44 aufgesetzt und die Halbschalen werden fluiddicht miteinander verschweißt oder verschraubt. Dabei weist auch die obere Halbschale einen Anlageflansch 49 auf. Der Grundkörpers 34 wird mit der Dichteinrichtung 30 fluiddicht verbunden, also insbesondere verschweißt. Es ist auch möglich, dass in Erstreckungsrichtung der Rohrkörper 23 Schraubbohrungen vorgesehen sind, durch die die beiden Halbschalen miteinander verbunden werden können, wobei zum Erzielen einer fluiddichten Ummantelung auch noch eine Dichtung vorgesehen sein kann. Es ist möglich, den Anlageflansch 60 mit einer Schraubverbindung fluiddicht an dem Anlageflansch 49 zu halten, wobei auch hier Dichtmittel, wie O-Ringe als Dichtmittel verwendet werden können.

Der in der Fig. 1 dargestellte Abgaswärmetauscher 10 wird von einem Abgasstrom, durch die Pfeile 11 schematisch dargestellt, durchströmt. Die Abgaszuführleitung 16 führt den Abgasstrom zu, der dann in eine Abgassammeiglocke 25 einströmt, welche als Diffusor fungiert und den Abgasstrom auf die einzelnen Abgasleitrohre 21 der Rohrkörper 23 verteilt. Der Abgasstrom 11 wird nach dem Durchströmen der Rohrkörper in der zweiten Abgassammelglocke 25 gesammelt und verlässt den Abgaswärmetauscher 10 in der Abgasabführleitung 17.

Der Abgaswärmetauscher wird von einer Kühlflüssigkeit, wie Wasser, als Kühlmittel durchströmt. Der Kühlmittelstrom wird durch die Pfeile 12 dargestellt. In dem Abgaswärmetausche bilden sich zwei Kühlmittelströme aus. Das Kühlmittel wird dabei durch die beiden im Bereich der Abgassammelglocken 25 ausgebildeten Kühlmittelzufuhranschlüsse 18 zugeführt. Es strömt jeweils von dem Kühlmittelzufuhranschluss 18 zu dem im Bereich des Aufeinandertreffens der beiden Rohrbündel 25 ausgebildeten Kühlmittelabfuhranschluss 19. Von dem Kühlmittelzufuhranschluss 18, der zufuhrseitig des Abgasstromes, also im Bereich der Abgaszuführleitung 16 ausgebildet ist, fließt das Kühlmittel parallel zum Durchströmen der Abgasleitrohre 21 durch den Abgasstrom zum Kühlmittelabfuhranschluss 19. Dies ist der in der dargestellten Ausführungsform kürzere Bereich, dessen Länge ungefähr halb so groß ist, wie der Längere der beiden Bereiche. Dabei ist der Kühlmittelstrom in der Kammer 14, die durch das Kühlmittelleitgehäuse 13 begrenzt wird, geführt und umströmt die Abgasleitrohre 21 allseitig, so dass ein guter Wärmefluss vom Abgasstrom auf den Kühlmittelstrom gewährleistet ist. Der Kühlmittelstrom, der entgegengesetzt der Durchströmrichtung der Rohrkörper 23 den Abgaswärmetauscher durchströmt, fließt von dem Kühlmittelzufuhranschluss 18 - der im Bereich der in die Abgasabführleitung mündenden Abgassammelglocke 25 ausgebildet ist - zu der Ringkammer 48 und gelangt ebenfalls in den Kühlmittelabfuhranschluss 19 und verlässt dort den Abgaswärmetauscher 10.

Beim Durchströmen des Abgaswärmetauschers wird das durchströmende Abgas abgekühlt, während das Kühlmittel erwärmt wird. Der Austausch der thermischen Energie wird durch eine möglichst große Oberfläche, in denen ein Kontakt zwischen einer möglichst dünnwandigen Trennfläche der Abgasstrom mit dem Kühlmittelstrom thermisch leitend in Kontakt ist, erleichtert.

Es entspricht dabei einem erfindungsgemäßen Verfahren, zum Kühlen eines Abgasstromes, wenn die Vorbeiströmrichtung des Kühlmittels am Abgasstrom in zwei Bereiche unterteilt ist, wobei der Abgasstrom in einem, beispielsweise dem heißeren der beiden Bereiche des Abgasstromes zunächst parallel zu dem Abgasstrom ausgerichtet ist, während in einem zweiten Bereich der Kühlmittelstrom entgegen der Durchströmrichtung des Abgasstromes gerichtet ist. Dabei können die beiden Bereiche in vorteilhafter Weise so gewählt werden, dass die thermische Längenausdehnung der Abgasleitrohre in diesen beiden Bereichen einander entspricht. Dies bedingt, dass der erste Bereich kürzer ausgebildet ist, weil sich in diesem Bereich eine raschere Abkühlung ausbildet als in dem anderen Bereich, wobei über die unterschiedliche Gesamtlänge letztendlich erreicht wird, dass der Temperaturunterschied der beiden Bereiche einander im Wesentlichen entspricht.

## Patentansprüche

1. Abgaswärmetauscher (10), der von einem Abgasstrom (11) und einem Kühlmittelstrom (12) durchströmt wird, wobei der Abgaswärmetauscher (10) für den Abgasstrom (11)
● Anschlussstellen (15) zum Anschließen des Abgaswärmetauschers (10)
● an eine Abgaszuführleitung (16) zum Zuführen eines heißen Abgasstromes (11)
● und eine Abgasabführleitung (17) zum Abführen des im Abgaswärmetauscher (10) abgekühlten Abgasstromes (11) aufweist, und
● wobei der Abgasstrom (11) den Abgaswärmetauscher (10) in einem Bündel von Abgasleitrohren (21) in einer Durchströmrichtung (22) durchströmt, und für den Kühlmittelstrom (12) eines Kühlmittels
● wenigstens einen Kühlmittelzufuhranschluss (18) und wenigstens einen Kühlmittelabfuhranschluss(19) aufweist,
welches Kühlmittel in einem Kühlmittelkanal geführt ist, in dem es das Bündel von Abgasleitrohren (21) umströmt,
wobei bezüglich der Durchströmrichtung des Abgasstromes (22) der Kühlmittelkanal wenigstens zwei Bereiche aufweist, die sich durch voneinander abweichende Durchströmrichtungen des Kühlmittels (27) unterscheiden, **dadurch gekennzeichnet, dass** ein entgegen der Durchströmrichtung des Abgasstromes (22) durchströmter Bereich des Kühlmittelkanaks abströmseitig der Abgasleitrohre (21) und vorzugsweise ein in Durchströmrichtung des Abgasstromes (22) durchströmter Bereich des Kühlmittelkanals anströmseitig der Abgasleitrohre (21) ausgebildet ist

2. Abgaswärmetauscher nach Anspruch 1,
**dadurch gekennzeichnet, dass**
dass jedem der Bereiche mindestens ein Kühlmittelkanalsegment (29) zugewiesen ist, wobei ein Kühlmittelkanalsegment (29) fluidisch jeweils mit dem Kühlmittelzufuhranschluss (18) verbunden ist.

3. Abgaswärmetauscher nach Anspruch 1 oder 2,
**dadurch gekennzeichnet,**
**dass** wenigstens ein Bereich des Kühlmittelkanals in der Durchströmrichtung des Abgasstromes (22) durchströmt wird.

4. Abgaswärmetauscher nach einem der vorhergehenden Ansprüche,
**dadurch gekennzeichnet,**
**dass** wenigstens ein Bereich entgegen der Durchströmrichtung des Abgasstromes (22) durchströmt wird.

5. Abgaswärmetauscher nach einem der Ansprüche 1 bis 4,
**dadurch gekennzeichnet,**
**dass** ein entgegen der Durchströmrichtung des Abgasstromes (22) durchströmter Bereich des Kühlmittelkanals anströmseitig der Abgasleitrohre (21) und vorzugsweise ein in Durchströmrichtung des Abgasstromes (22) durchströmter Bereich des Kühlmittelkanals abströmseitig der Abgasleitrohre (21) ausgebildet ist.

6. Abgaswärmetauscher nach einem der vorhergehenden Ansprüche,
**dadurch gekennzeichnet,**
**dass** die wenigstens zwei Bereiche ein festes Längenverhältnis aufweisen.

7. Abgaswärmetauscher nach Anspruch 6,
**dadurch gekennzeichnet,**
**dass** das Längenverhältnis in Abhängigkeit des thermischen Ausdehnungskoeffizienten des für die Herstellung der Abgasleitrohre (21) verwendeten Materials bestimmt ist, wobei das Längenverhältnis vorzugsweise so bestimmt ist, dass eine feste Beziehung in der thermischen Längenausdehnung der beiden Bereiche eingehalten wird, wobei die feste Beziehung insbesondere darin besteht, dass das Längenverhältnis temperaturunabhängig konstant und vorzugsweise gleich Eins ist.

8. Abgaswärmetauscher nach Anspruch 6,
**dadurch gekennzeichnet,**
**dass** das Längenverhältnis derart bestimmt ist, dass in jedem der beiden Bereiche ein vorgegebener Anteil der vom Abgasstrom (11) insgesamt abgegebenen Wärmeenergie abgegeben wird.

9. Abgaswärmetauscher nach Anspruch 8,
**dadurch gekennzeichnet,**
**dass** das Längenverhältnis derart bestimmt ist, dass in einem, insbesondere dem zuerst vom Abgasstrom (11) durchströmten Bereich, ein geringer Anteil der insgesamt abgegebenen Wärmeenergie abgegeben wird, wobei vorzugsweise in einem der beiden Bereiche mehr als 70 %, insbesondere zwischen 80 % und 95 % der insgesamt abgegebenen Wärmemenge abgegeben wird.

10. Abgaswärmetauscher nach einem der vorhergehenden Ansprüche,
**dadurch gekennzeichnet,**
**dass** die Abgasleitrohre (21) derart ausgebildet sind, dass in ihrem Inneren eine turbulente Abgasströmung ausgebildet ist.

11. Abgaswärmetauscher insbesondere nach dem Oberbegriff des Anspruches 1 oder nach einem der vorhergehenden Ansprüche,
**dadurch gekennzeichnet,**
**dass** er wenigstens einen Rohrkörper (23) aufweist, wobei ein Rohrkörper (23) aus einem Bündel von parallel zueinander ausgerichteten Abgasleitrohren (21) gebildet wird, deren Enden jeweils an gemeinsamen Rohrböden (24) fixiert sind, wobei die Abgasleitrohre (21) jeweils in einem Durchbruch des jeweiligen Rohrbodens (24) fußen, diesen fluiddicht abschließen und alle Durchbrüche des Rohrbodens (24) in ein Abgasleitrohr (21) münden.

12. Abgaswärmetauscher nach Anspruch 11,
**dadurch gekennzeichnet,**
**dass** bei wenigstens einem der Rohrböden (24) auf der dem Rohrbündel abgewandten Seite eine Abgassammelglocke (25) angeordnet ist, welche eine Anschlussstelle (15) aufweist und mit dem Rohrboden (24) fluiddicht verbunden ist.

13. Abgaswärmetauscher nach Anspruch 11 oder 12,
**dadurch gekennzeichnet,**
**dass** der Abgaswärmetauscher (10) zwei Rohrkörper (23) aufweist, wobei zwei Rohrböden (24) der Rohrkörper (23) einander zugewandt sind - insbesondere unmittelbar aneinander stoßen, wobei die Abgasleitrohre (21) vorzugsweise fluchtend zueinander ausgerichtet sind - und nach außen hin fluiddicht miteinander verbunden sind.

14. Abgaswärmetauscher nach Anspruch 13,
**dadurch gekennzeichnet,**
**dass** an den beiden freien Enden der zwei miteinander verbundenen Rohrkörper (23) jeweils eine Abgassammelglocke (25) angeordnet ist, welche eine Anschlussstelle (15) aufweist und mit dem Rohrbündel fluiddicht verbunden ist.

15. Abgaswärmetauscher nach Anspruch 14,
**dadurch gekennzeichnet,**
**dass** der Kühlmittelkanal sich zwischen den beiden Abgassammelglocken (25) erstreckt, wobei jeweils eine Dichteinrichtung (30) zwischen den Abgassammelglocken (25) und einem den Kühlmittelkanal begrenzenden Kühlmittelleitgehäuse (13) ausgebildet ist, welches die Rohrkörper (23) radial umschließt.

16. Abgaswärmetauscher nach Anspruch 15,
**dadurch gekennzeichnet,**
**dass** das Kühlmittelleitgehäuse (13) in der Gegend der Abgassammelglocken (25) je einen Anschluss und dazwischenliegend wenigstens einen weiteren aufweist.

17. Abgaswärmetauscher nach Anspruch 16,
**dadurch gekennzeichnet,**
**dass** der wenigstens eine, weitere Anschluss dort ausgebildet ist, wo zwei Bereiche des Kühlmittelstromes (26) aneinander grenzen.

18. Abgaswärmetauscher nach Anspruch 14 oder 15,
**dadurch gekennzeichnet,**
**dass** die Anschlüsse in der Gegend der Abgassammelglocken (25) Kühlmittelzufuhranschlüsse (18) und ein dazwischen liegender weiterer Anschluss ein Kühlmittelabfuhranschluss (19) sind.

19. Abgaswärmetauscher nach einem der Ansprüche 15 bis 18,
**dadurch gekennzeichnet,**
**dass** die Dichteinrichtung (30) wenigstens ein Dichtelement (31) enthält und eine fluiddichte Verbindung zwischen Kühlmittelleitgehäuse (13) und Abgassammelglocken (25) herstellt, so dass von dem Kühlmittelgehäuse (13) ein die Abgasleitrohre (21) umgebende, Kühlmittel durchströmte Kammer gebildet wird.

20. Abgaswärmetauscher nach einem der Ansprüche 15 bis 19,
**dadurch gekennzeichnet,**
**dass** eine Dichteinrichtung zwei voneinander unabhängige Dichtelemente (31) umfasst, die jeweils eine fluiddichte Verbindung zwischen Kühlmittelleitgehäuse (13) und Abgassammelglocke (25) herstellen, wobei zwischen den Dichtelementen (31) vorzugsweise eine Zwischenkammer (35) ausgebildet ist, im Bereich derer insbesondere wenigstens eine nach außen führende Bohrung (37) vorgesehen ist.

21. Abgaswärmetauscher nach einem der Ansprüche 11 bis 20,
**dadurch gekennzeichnet,**
**dass** die Rohrböden (24) wenigstens abschnittsweise radial an dem Kühlmittelleitgehäuse (13) anliegen und die Rohrböden (24) im Kühlmittelleitgehäuse (13) abstützen.

22. Abgaswärmetauscher nach Anspruch 21,
**dadurch gekennzeichnet,**
**dass** die Rohrböden (24) den Fluidpfad im Kühlmittelleitgehäuse (13) unterbrechen und das Kühlmittelleitgehäuse (13) in zwei fluidisch voneinander getrennte Bereiche unterteilt.

23. Abgaswärmetauscher nach Anspruch 22,
**dadurch gekennzeichnet,**
**dass** im Bereich der Rohrböden (24) ein mit den beiden voneinander getrennten Bereichen verbundener Anschluss ausgebildete ist, wobei der Anschluss entweder als Kühlmittelzufuhranschluss (18) oder Kühlmittelabfuhranschluss (19) für beide Bereiche dient.

24. Abgaswärmetauscher nach einem der Ansprüche 21 bis 23,
**dadurch gekennzeichnet,**
**dass** das Kühlmittelleitgehäuse (13) in zwei Segmente unterteilt ist, wobei die Segmente vorzugsweise jeweils von einer Abgassammelglocke (25) bis zu einem der Rohrböden (24) reicht, wobei insbesondere zwischen wenigstens einem Rohrboden (24) und einem der Segmente eine umlaufende, fluiddichte Schweißverbindung ausgebildet ist und weiter vorzugsweise zwischen den beiden Segmenten in diesem Bereich ebenfalls eine fluiddichte Schweißverbindung dargestellt ist.

25. Dichteinrichtung (30) für einen Abgaswärmetauscher (10) nach einem der vorhergehenden Ansprüche, wobei die Dichteinrichtung (30) zwischen einem abgasführenden Heißbauteil (40) und einem eine Kühleinrichtung nach außen begrenzenden Kaltbauteil (41), aus dem ein Teil des Heißbauteils (40) nach außen geführt ist, ausgebildet ist, wobei das Heißbauteil (40) in dem Kaltbauteil (41) axial geführt längs verschiebbar gehalten ist,
**dadurch gekennzeichnet,**
**dass** die Dichteinrichtung (30) zwei voneinander unabhängige Dichtelemente (31) umfasst, die jeweils eine fluiddichte Verbindung zwischen Heißbauteil (40) und Kaltbauteil (41) herstellen.

26. Dichteinrichtung nach Anspruch 25,
**dadurch gekennzeichnet,**
**dass** zwischen den beiden Dichtelementen (31) eine von Heißbauteil (40) und Kaltbauteil (41) begrenzte, durch die beiden Dichtelemente (31) fluiddicht abgeschlossene Zwischenkammer (35) ausgebildet ist.

27. Dichteinrichtung nach Anspruch 26,
**dadurch gekennzeichnet,**
**dass** im Kaltbauteil (41) in dem Bereich zwischen den beiden Dichtelementen (31) wenigstens eine das Kaltbauteil (41) durchsetzende, nach außen führende Bohrung aufweist, welche Bohrung vorzugsweise wenigstens über eine Teillänge ein Gewinde aufweist.

28. Dichteinrichtung nach Anspruch 27,
**dadurch gekennzeichnet,**
**dass** die Dichteinrichtung (30) zwei oder drei Bohrungen aufweist, die zum Anschließen einer Abdrückvorrichtung zum Durchführen einer Dichtigkeitsüberprüfung geeignet sind.

29. Dichteinrichtung nach einem der Ansprüche 25 bis 28,
**dadurch gekennzeichnet,**
**dass** wenigstens eines der beiden Dichtelemente (31) eine Radialdichtung (32) ist.

30. Dichteinrichtung nach einem der Ansprüche 25 bis 29,
**dadurch gekennzeichnet,**
**dass** wenigstens eines der beiden Dichtelemente (31) eine Axialdichtung (33), insbesondere eine Balgdichtung, ist.

31. Dichteinrichtung nach einem der Ansprüche 25 bis 30,
**dadurch gekennzeichnet,**
**dass** die Dichteinrichtung (30) eine Axialdichtung (33) und eine Radialdichtung (32) aufweist, wobei die beiden Dichtungen beabstandet voneinander angeordnet sind.

## Claims

1. An exhaust-gas heat exchanger (10) through which pass an exhaust-gas flow (11) and a coolant flow (12), said exhaust-gas heat exchanger (10) having
- connecting points (15) for connecting the exhaust-gas heat exchanger (10) to
- an exhaust-gas supply line (16) for supplying a hot exhaust-gas flow (11) and
- an exhaust-gas discharge line (17) for discharging the exhaust-gas flow (11) cooled in the exhaust-gas heat exchanger (10)
for the exhaust-gas flow (11),
- the exhaust-gas flow (11) flowing through the exhaust-gas heat exchanger (10) in a bundle of exhaust-gas pipes (21) in a direction of flow (22), and having
- at least one coolant supply connection (18) and at least one coolant discharge connection (19) for the coolant flow (12) of a coolant, said coolant passing through a coolant channel in which it bypasses the bundle of exhaust-gas pipes (21),
said coolant channel having two areas in terms of the direction of flow of the exhaust-gas (22) which are distinguished by differing directions of coolant flow (27),
**characterised in that**
one area of the coolant channel in which the flow passes against the direction of flow of the exhaust-gas flow (22) is provided downstream of the exhaust-gas pipes (21) and one area of the coolant channel in which the flow passes in the direction of flow of the exhaust-gas flow (22) is preferably provided upstream of the exhaust-gas pipes (21).

2. An exhaust-gas heat exchanger in accordance with claim 1,
**characterised in that**
at least one coolant channel segment (29) is assigned to each of these areas, one coolant channel segment (29) being fluidically connected to the coolant supply connection (18).

3. An exhaust-gas heat exchanger in accordance with claim 1 or 2,
**characterised in that**
the flow passes through at least one area of the coolant channel in the direction of the exhaust-gas flow (22).

4. An exhaust-gas heat exchanger in accordance with one of the preceding claims,
**characterised in that**
the flow passes through at least one area against the direction of the exhaust-gas flow (22).

5. An exhaust-gas heat exchanger in accordance with one of claims 1 to 4,
**characterised in that**
one area of the coolant channel in which the flow passes against the direction of flow of the exhaust-gas flow (22) is provided upstream of the exhaust-gas pipes (21) and one area of the coolant channel in which the flow passes in the direction of flow of the exhaust-gas flow (22) is preferably provided downstream of the exhaust-gas pipes (21).

6. An exhaust-gas heat exchanger in accordance with one of the preceding claims;
**characterised in that**
the at least two areas have a fixed aspect ratio.

7. An exhaust-gas heat exchanger in accordance with claim 6,
**characterised in that**
the aspect ratio is determined dependent on the thermal coefficient of expansion of the material used to produce the exhaust-gas pipes (21), the aspect ratio preferably being determined in such a manner as to respect a fixed relationship between the thermal elongation in the two areas, said fixed relationship being represented by the fact that the aspect ratio is constant irrespective of temperature and preferably equal to zero.

8. An exhaust-gas heat exchanger in accordance with claim 6,
**characterised in that**
the aspect ratio is determined in such a manner that a predetermined percentage of the total thermal energy emitted by the exhaust-gas flow (11) is emitted in each of the two areas.

9. An exhaust-gas heat exchanger in accordance with claim 8,
**characterised in that**
the aspect ratio is determined in such a manner that in one area, in particular the area through which the exhaust-gas flow (11) passes first, a small percentage of the total thermal energy is emitted with more than 70%, and in particular between 80% and 95%, of the total thermal energy preferably being emitted in one of these two areas.

10. An exhaust-gas heat exchanger in accordance with one of the preceding claims,
**characterised in that**
the exhaust-gas pipes (21) are designed in such a manner that a turbulent exhaust-gas flow is created inside them.

11. An exhaust-gas heat exchanger in particular in accordance with the pre-characterising clause of claim 1 or in accordance with one of the preceding claims,
**characterised in that**
it has at least one pipe body (23), a pipe body (23) consisting of a bundle of parallel oriented exhaust gas pipes (21) the ends of which are fixed to a common pipe base (24), said exhaust-gas pipes (21) each being based in an opening in the corresponding pipe base (24) and sealing said opening in a fluid-tight manner, and all openings in the pipe base (24) leading into an exhaust-gas pipe (21).

12. An exhaust-gas heat exchanger in accordance with claim 11,
**characterised in that**
positioned on the side of at least one of the pipe bases (24) facing away from the pipe bundle is an exhaust-gas collecting bell (25) which has a connecting point (15) and is connected to the pipe base (24) in a fluid-tight manner.

13. An exhaust-gas heat exchanger in accordance with claim 11 or 12,
**characterised in that**
the exhaust-gas heat exchanger (10) has two pipe bodies (23), two pipe bases (24) of the pipe bodies (23) facing one another - in particular abutting one another, the exhaust-gas pipes (21) preferably being aligned flush with one another - and being connected to one another and sealed in a fluid-tight manner in relation to the exterior.

14. An exhaust-gas heat exchanger in accordance with claim 13,
**characterised in that**
positioned at either free end of the two connected pipe bodies (23) is an exhaust-gas collecting bell (25) which has a connecting point (15) and is connected to the pipe bundle in a fluid-tight manner.

15. An exhaust-gas heat exchanger in accordance with claim 14,
**characterised in that**
the coolant channel extends between the two exhaust-gas collecting bells (25), a sealing device (30) being located between each of the exhaust-gas collecting bells (25) and a coolant housing (13) which delimits the coolant channel and radially encloses the pipe bodies (23).

16. An exhaust-gas heat exchanger in accordance with claim 15,
**characterised in that**
the coolant housing (13) has a connection in the area of each of the exhaust-gas collecting bells (25) and at least one further connection between them.

17. An exhaust-gas heat exchanger in accordance with claim 16,
**characterised in that**
the at least one, further connection is provided where two areas of the coolant flow (26) meet.

18. An exhaust-gas heat exchanger in accordance with claim 14 or 15,
**characterised in that**
the connections in the area of the exhaust-gas collecting bells (25) are coolant supply connections (18) and a further connection located between them is a coolant discharge connection (19).

19. An exhaust-gas heat exchanger in accordance with one of claims 15 to 18,
**characterised in that**
the sealing device (30) contains at least one sealing element (31) and forms a fluid-tight connection between the coolant housing (13) and the exhaust-gas collecting bells (25) such that the coolant housing (13) forms a chamber surrounded by the exhaust gas pipes (21) through which coolant passes.

20. An exhaust-gas heat exchanger in accordance with one of claims 15 to 19,
**characterised in that**
a sealing device (30) comprises two independent sealing elements (31) each of which forms a fluid-tight connection between the coolant housing (13) and the exhaust-gas collecting bell (25), an intermediate chamber (3 5) preferably being formed between the sealing elements (31) in the area of which is provided in particular at least one outward leading hole (37).

21. An exhaust-gas heat exchanger in accordance with one of claims 11 to 20,
**characterised in that**
the pipe bases (24) lies radially adjacent to the coolant housing (13) in certain sections at least and the pipe bases (24) are supported by the coolant housing (13).

22. An exhaust-gas heat exchanger in accordance with claim 21,
**characterised in that**
the pipe bases (24) interrupt the fluid path in the coolant housing (13) and divide the coolant housing (13) into two fluidically separate areas.

23. An exhaust-gas heat exchanger in accordance with claim 22,
**characterised in that**
formed in the area of the pipe bases (24) is a connection connected to the two separate areas, the connection serving either as the coolant supply connection (18) or the coolant discharge connection (19) for both areas.

24. An exhaust-gas heat exchanger in accordance with one of claims 21 to 23,
**characterised in that**
the coolant housing (13) is divided into two segments, the segments preferably extending from an exhaust-gas collecting bell (25) to one of the pipe bases (24), a circumferential fluid-tight welded connection being formed in particular between at least one pipe base (24) and one of the segments and further a fluid-tight welded connection also preferably being formed between the two segments in this area.

25. A sealing device (30) for an exhaust-gas heat exchanger (10) in accordance with one of the preceding claims, said sealing device (30) being formed between an exhaust-gas-discharging hot component (40) and a cold component (41) delimiting the exterior of a cooling device out of which a part of the hot component (40) projects outwards, the hot component (40) being mounted axially in the cold component (41) such that it can be moved longitudinally,
**characterised in that**
the sealing device (30) comprises two independent sealing elements (31) which together form a fluid-tight connection between the hot component (40) and the cold component (41).

26. A sealing device in accordance with claim 25,
**characterised in that**
formed between the two sealing elements (31) is an intermediate chamber (35) which is sealed fluid-tight by the two sealing elements (31) and delimited by the hot component (40) and the cold component (41).

27. A sealing device in accordance with claim 26,
**characterised in that**
in the area between the two sealing elements (31) the cold component (41) has at least one outward leading hole which passes through the cold component (41), said hole preferably having a thread along at least part of its length.

28. A sealing device in accordance with claim 27,
**characterised in that**
the sealing device (30) has two or three holes suitable for the connection of a hydrostatic device for the performance of a leak test.

29. A sealing device in accordance with one of claims 25 to 28,
**characterised in that**
at least one of the two sealing elements (31) is a radial seal (32).

30. A sealing device in accordance with one of claims 25 to 29,
**characterised in that**
at least one of the two sealing elements (31) is an axial seal (33), in particular a diaphragm seal.

31. A sealing device in accordance with one of claims 25 to 30,
**characterised in that**
the sealing device (30) has an axial seal (33) and a radial seal (32), the two seals being positioned a certain distance apart.

## Revendications

1. Échangeur thermique de gaz d'échappement (10) qui est parcouru par un flux de gaz d'échappement (11) et un flux d'agent réfrigérant (12), dans lequel l'échangeur thermique de gaz d'échappement (10) comporte pour le flux de gaz d'échappement (11)
◆ des points de raccordement (15) pour le raccordement de l'échangeur thermique de gaz d'échappement (10)
◆ une conduite d'arrivée de gaz d'échappement (16) pour l'amenée d'un flux de gaz d'échappement chaud (11)
◆ et une conduite d'évacuation de gaz d'échappement (17) pour l'évacuation du flux de gaz d'échappement refroidi (11) dans l'échangeur thermique de gaz d'échappement (10), et
dans lequel le flux de gaz d'échappement (11) traverse l'échangeur thermique de gaz d'échappement (10) dans un faisceau de tubes directeurs de gaz d'échappement (21) dans un sens de passage (22), et comporte pour le flux d'agent réfrigérant (12) d'un agent réfrigérant
◆ au moins un raccord d'alimentation d'agent réfrigérant (18) et au moins un raccord d'évacuation d'agent réfrigérant (19),
◆ lequel agent réfrigérant est dirigé dans un conduit d'agent réfrigérant dans lequel il contourne le faisceau de tubes directeurs (21),
dans lequel, par rapport au sens de passage du flux de gaz d'échappement (22), le conduit d'agent réfrigérant comporte au moins deux zones qui se différencient par des sens de passage de l'agent réfrigérant (27) différents l'un de l'autre, **caractérisé en ce qu'**une zone du conduit d'agent réfrigérant parcourue dans le sens inverse du sens de passage du flux de gaz d'échappement (22) est formée du côté de l'évacuation des tubes directeurs de gaz d'échappement (21) et une zone du conduit d'agent réfrigérant parcourue dans le sens de passage du flux de gaz d'échappement (22) est formée, de préférence, du côté de l'admission des tubes directeurs de gaz d'échappement (21).

2. Échangeur thermique de gaz d'échappement selon la revendication 1, **caractérisé en ce qu'**au moins un segment de conduit d'agent réfrigérant (29) est associé à chacune des zones, un segment de conduit d'agent réfrigérant (29) étant en communication fluidique avec le raccord d'alimentation d'agent réfrigérant (18) correspondant.

3. Échangeur thermique de gaz d'échappement selon la revendication 1 ou 2, **caractérisé en ce qu'**au moins une zone du conduit d'agent réfrigérant est parcourue dans le sens de passage du flux de gaz d'échappement (22).

4. Échangeur thermique de gaz d'échappement selon l'une quelconque des revendications précédentes, **caractérisé en ce qu'**au moins une zone est parcourue dans le sens inverse du sens de passage du flux de gaz d'échappement (22).

5. Échangeur thermique de gaz d'échappement selon l'une quelconque des revendications 1 à 4, **caractérisé en ce qu'**une zone du conduit d'agent réfrigérant parcourue dans le sens inverse du sens de passage du flux de gaz d'échappement (22) est formée du côté de l'admission des tubes directeurs de gaz d'échappement (21) et une zone du conduit d'agent réfrigérant parcourue dans le sens de passage du flux de gaz d'échappement (22) est formée, de préférence, du côté de l'évacuation des tubes directeurs de gaz d'échappement (21).

6. Échangeur thermique de gaz d'échappement selon l'une quelconque des revendications précédentes, **caractérisé en ce que** les au moins deux zones présentent un rapport de longueurs fixe.

7. Échangeur thermique de gaz d'échappement selon la revendication 6, **caractérisé en ce que** le rapport de longueurs est déterminé en fonction du coefficient de dilatation thermique du matériau utilisé pour la fabrication des tubes directeurs de gaz d'échappement (21), le rapport de longueurs étant déterminé, de préférence, de manière à maintenir une relation fixe dans la dilatation longitudinale thermique des deux zones, la relation fixe consistant, en particulier, à maintenir le rapport de longueurs constant et, de préférence, égal à un indépendamment de la température.

8. Échangeur thermique de gaz d'échappement selon la revendication 6, **caractérisé en ce que** le rapport de longueurs est déterminé de manière à ce qu'une fraction prédéterminée de l'énergie thermique dissipée globalement par le flux de gaz d'échappement (11) soit dissipée dans chacune des deux zones.

9. Échangeur thermique de gaz d'échappement selon la revendication 8, **caractérisé en ce que** le rapport de longueurs est déterminé de telle manière qu'une fraction réduite de l'énergie thermique dissipée globalement soit dissipée dans une zone, en particulier la zone parcourue en premier par le flux de gaz d'échappement (11), plus de 70%, en particulier entre 80% et 95% de l'énergie thermique dissipée globalement étant dissipés, de préférence, dans l'une des deux zones.

10. Échangeur thermique de gaz d'échappement selon l'une quelconque des revendications précédentes, **caractérisé en ce que** les tubes directeurs de gaz d'échappement (21) sont conçus de manière à générer un écoulement de gaz d'échappement turbulent à l'intérieur de ceux-ci.

11. Échangeur thermique de gaz d'échappement, en particulier selon le préambule de la revendication 1 ou selon l'une quelconque des revendications précédentes, **caractérisé en ce qu'**il comprend au moins un corps tubulaire (23), lequel corps tubulaire (23) étant constitué par un faisceau de tubes directeurs de gaz d'échappement (21) dirigés parallèlement les uns aux autres dont les extrémités sont fixées chacune à des plaques tubulaires communes (24), les tubes directeurs de gaz d'échappement (21) reposant chacun dans un percement de la plaque tubulaire correspondante (24), obturent celui-ci de manière étanche aux fluides et tous les percements de la plaque tubulaire (24) débouchent dans un tube directeur de gaz d'échappement (21).

12. Échangeur thermique de gaz d'échappement selon la revendication 11, **caractérisé en ce qu'**une cloche de captage de gaz d'échappement (25), qui comporte un point de raccordement (15) et qui est en communication fluidique avec la plaque tubulaire (24), est disposée dans au moins l'une des plaques tubulaires (24) sur le côté opposé au faisceau de tubes.

13. Échangeur thermique de gaz d'échappement selon la revendication 11 ou 12, **caractérisé en ce que** l'échangeur thermique de gaz d'échappement (10) comporte deux corps tubulaires (23), deux plaques tubulaires (24) des corps tubulaires (23) étant dirigées l'une vers l'autre - en particulier, étant directement contigües, les tubes directeurs de gaz d'échappement (21) étant, de préférence, alignés les uns sur les autres - et étant en communication fluidique l'une avec l'autre en direction de l'extérieur.

14. Échangeur thermique de gaz d'échappement selon la revendication 13, **caractérisé en ce qu'**une cloche de captage de gaz d'échappement (25), qui comporte un point de raccordement (15) et qui est en communication fluidique avec le faisceau de tubes, est disposée aux deux extrémités libres des deux corps tubulaires (23) raccordés l'un à l'autre.

15. Échangeur thermique de gaz d'échappement selon la revendication 14, **caractérisé en ce que** le conduit d'agent réfrigérant s'étend entre les deux cloches de captage de gaz d'échappement (25), un dispositif d'étanchéité (30) étant disposé entre les cloches de captage de gaz d'échappement (25) et un boîtier de guidage d'agent réfrigérant (13), qui entoure radialement les corps tubulaires (23), délimitant le conduit d'agent réfrigérant.

16. Échangeur thermique de gaz d'échappement selon la revendication 15, **caractérisé en ce que** le boîtier de guidage d'agent réfrigérant (13) comporte un raccord dans la région des cloches de captage de gaz d'échappement (25) et au moins un autre raccord entre celles-ci.

17. Échangeur thermique de gaz d'échappement selon la revendication 16, **caractérisé en ce que** le au moins un autre raccord est formé là où deux zones du flux d'agent réfrigérant (26) sont adjacentes.

18. Échangeur thermique de gaz d'échappement selon la revendication 14 ou 15, **caractérisé en ce que** les raccords dans la région des cloches de captage de gaz d'échappement (25) sont des raccords d'alimentation d'agent réfrigérant (18) et un autre raccord disposé entre celles-ci est un raccord d'évacuation d'agent réfrigérant (19).

19. Échangeur thermique de gaz d'échappement selon l'une quelconque des revendications 15 à 18, **caractérisé en ce que** le dispositif d'étanchéité (30) comprend au moins un élément d'étanchéité (31) et établit une communication fluidique entre le boîtier de guidage d'agent réfrigérant (13) et les cloches de captage de gaz d'échappement (25), de sorte qu'un compartiment entourant les tubes directeurs de gaz d'échappement (21), parcouru par un agent réfrigérant, est formé par le boîtier de guidage d'agent réfrigérant (13).

20. Échangeur thermique de gaz d'échappement selon l'une quelconque des revendications 15 à 19, **caractérisé en ce qu'**un dispositif d'étanchéité comprend deux éléments d'étanchéité (31) indépendants l'un de l'autre qui établissent chacun une communication fluidique entre le boîtier de guidage d'agent réfrigérant (13) et la cloche de captage de gaz d'échappement (25), un compartiment intermédiaire (35) étant formé, de préférence, entre les éléments d'étanchéité (31) dans la zone duquel est prévu, en particulier, au moins un forage (37) débouchant vers l'extérieur.

21. Échangeur thermique de gaz d'échappement selon l'une quelconque des revendications 11 à 20, **caractérisé en ce que** les plaques tubulaires (24) sont adjacentes, au moins par tronçons, radialement au boîtier de guidage d'agent réfrigérant (13) et les plaques tubulaires (24) prennent appui dans le boîtier de guidage d'agent réfrigérant (13).

22. Échangeur thermique de gaz d'échappement selon la revendication 21, **caractérisé en ce que** les plaques tubulaires (24) interrompent le trajet fluidique dans le boîtier de guidage d'agent réfrigérant (13) et divisent le boîtier de guidage d'agent réfrigérant (13) en deux zones séparées fluidiquement l'une de l'autre.

23. Échangeur thermique de gaz d'échappement selon la revendication 22, **caractérisé en ce qu'**un raccord relié aux deux zones séparées l'une de l'autre est formé dans la zone des plaques tubulaires (24), le raccord servant soit de raccord d'alimentation d'agent réfrigérant (18) soit de raccord d'évacuation d'agent réfrigérant (19) pour les deux zones.

24. Échangeur thermique de gaz d'échappement selon l'une quelconque des revendications 21 à 23, **caractérisé en ce que** le boîtier de guidage d'agent réfrigérant (13) est divisé en deux segments, les segments s'étendant chacun, de préférence, entre une cloche de captage de gaz d'échappement (25) et l'une des plaque tubulaire (24), un assemblage soudé circulaire étanche aux fluides étant prévu, en particulier, entre au moins une plaque tubulaire (24) et l'un des segments et un assemblage soudé étanche aux fluides étant également, de préférence, prévu dans cette zone entre les deux segments.

25. Dispositif d'étanchéité (30) pour un échangeur thermique de gaz d'échappement (10) selon l'une quelconque des revendications précédentes, dans lequel le dispositif d'étanchéité (30) est réalisé entre un élément chaud de guidage de gaz d'échappement (40) et un élément froid (41) délimitant un dispositif réfrigérant vers l'extérieur à partir duquel une partie de l'élément chaud (40) est dirigée vers l'extérieur, l'élément chaud (40) étant maintenu dans l'élément froid (41) de manière à pouvoir se déplacer axialement dans la longueur, **caractérisé en ce que** le dispositif d'étanchéité (30) comprend deux éléments d'étanchéité (31) qui établissent chacun une communication fluidique entre l'élément chaud (40) et l'élément froid (41).

26. Dispositif d'étanchéité selon la revendication 25, **caractérisé en ce qu'**un compartiment intermédiaire (35) délimité par l'élément chaud (40) et l'élément froid (41), obturé de manière étanche aux fluides par les deux éléments d'étanchéité (31), est formé entre les deux éléments d'étanchéité (31).

27. Dispositif d'étanchéité selon la revendication 26, **caractérisé en ce que** l'élément froid (41), dans la zone entre les deux éléments d'étanchéité (31), comporte au moins un forage traversant l'élément froid (41), conduisant vers l'extérieur, lequel forage comporte un filetage, de préférence, au moins sur une partie de la longueur.

28. Dispositif d'étanchéité selon la revendication 27, **caractérisé en ce que** le dispositif d'étanchéité (30) comprend deux ou trois forages qui sont conçus pour le raccordement d'un dispositif de pression pour la réalisation d'un essai d'étanchéité.

29. Dispositif d'étanchéité selon l'une quelconque des revendications 25 à 28, **caractérisé en ce qu'**au moins l'un des deux éléments d'étanchéité (31) est une garniture d'étanchéité radiale (32).

30. Dispositif d'étanchéité selon l'une quelconque des revendications 25 à 29, **caractérisé en ce qu'**au moins l'un des deux éléments d'étanchéité (31) est une garniture d'étanchéité axiale (33), en particulier une garniture d'étanchéité à soufflet.

31. Dispositif d'étanchéité selon l'une quelconque des revendications 25 à 30, **caractérisé en ce que** le dispositif d'étanchéité (30) comporte une garniture d'étanchéité axiale (33) et une garniture d'étanchéité radiale (32), les deux garnitures d'étanchéité étant agencées à distance l'une de l'autre.
